# EUROPEAN PATENT SPECIFICATION

(11) **EP 3 365 247 B1**
(45) Date of publication and mention of the grant of the patent: **12.05.2021**
(21) Application number: 16794442.0
(22) Date of filing: 19.10.2016
(51) Int. Cl.: B65D 85/32, G09F 3/00

(54) **PACKAGING UNIT WITH COUNTER-EMBOSSED LABEL, AND METHOD FOR PROVIDING THE PACKAGING UNIT**
VERPACKUNGSEINHEIT MIT GEGENGEPRÄGTEM ETIKETT SOWIE VERFAHREN ZUM BEREITSTELLEN DER VERPACKUNGSEINHEIT
UNITÉ D'EMBALLAGE À ÉTIQUETTE À CONTRE RELIEF ET PROCÉDÉ DE METTRE EN PLACE D'UNITÉ D'EMBALLAGE

(30) Priority: 20.10.2015 NL 2015636
(43) Date of publication of application: 29.08.2018
(73) Proprietor: Huhtamaki Molded Fiber Technology B.V., 8938 AN Leeuwarden (NL)
(72) Inventor: DIJKSTRA, Wijbe, 9035 DD Dronrijp (NL); VAN DER MEIJ, Jelmer Gerhard Jan, 8601 GL Sneek (NL); KIENSTRA, Wouter Josephus, 8604 AD Sneek (NL)
(74) Representative: Verdijck, Gerardus
(86) International application number: PCT/NL2016/050717
(87) International publication number: WO 2017/069619

(56) References cited:
- WO-A1-2009/032897
- WO-A1-2013/019107
- WO-A2-2016/076703
- JP-A- 2006 044 799
- NL-C- 2 011 037
- US-A- 4 617 748

## Description

The present invention relates to a packaging unit made of moulded pulp for products like eggs and similar products like kiwis and tomatoes, for example.

Egg cases, containers or cartons known in practice are generally fabricated from carton made from moulded pulp originating from paper material. Such units comprise a bottom part, provided with compartments for individual products, and a cover part that is often hingedly connected to the bottom part. Products like eggs are transported in these units and displayed on shelves in supermarkets, for example. Labels are provided to enable display of information of any kind to a (potential) buyer and/or consumer.

NL 2011037 discloses a label comprising an embossing to improve providing of information to a buyer and/or consumer.

WO2009/032897 A1 discloses a multi-pack of packages of individually packaged products. WO2014/185774 A1 discloses a moulded pulp packaging unit having an embossed label being provided with a cut to interact with the locking element. US4617748 discloses a plastic packaging unit having a 5-sided non-embossed label.

Packaging units are subject to loads during storage or display and impacting forces during transport, for example. These loads and forces may damage the packaging unit and/or the products inside such packaging unit. This may result in significant loss in display properties and other packaging unit properties. To prevent these losses conventional packaging units have to be provided with sufficient strength, thereby requiring more packaging material. This results in high packaging costs. Also, the loads and forces may disrupt the visual appearance of the packaging unit as a whole and specifically the label thereof. This reduces the attractiveness of the packaging unit for a (potential) buyer and/or consumer. Also, information on the label may become unreadable.

The present invention has for its object to obviate or at least reduce the above stated problems in conventional packaging units such as egg cases or egg cartons.

The present invention provides for this purpose a packaging unit according to claim 1.

According to the present invention the label is provided with an embossment, to which is also referred to as an embossing. This provides an additional means to provide a consumer or (potential) buyer with information and enhances the visual appearance of the product. Such embossed label is also referred to as a touch-feel label.

Having a packaging unit with a bottom part and a cover part made of moulded pulp enables transport and display of products without damaging the products. This is especially relevant in case of vulnerable products like eggs. In a preferred embodiment, the cover part is hingedly connected to the bottom part on the rear side thereof. On at least the front side of the packaging unit a lock is provided comprising a first locking element on the bottom part, such as a cam or edge, and a second locking element in the cover part, such as an opening, that is configured for receiving the first locking element.

By providing an embossing, preferably an embossing in the label providing a raised relief, additional design options are achieved for providing information to a user or consumer. For example, it would be possible to present brand and/or product specific designed features possibly presenting the brand or product identity using the embossed label for the packaging unit according to the present invention. For example, one packaging unit design can be used for a range of products of different brands as the specific design features and identifications are provided on the label. This significantly reduces change-overs related to the packaging unit such that the design and production costs can be carried by a (large) number of products. More specifically, laborious adaptations to the production process can be kept to a minimum, while improving the design options for the packaging unit.

Providing a counter-embossing in the embossing further enhances design options and possibilities to further improve display of information to users or (potential) buyers. Also, the counter-embossing provides additional strength to the embossing. For example, the counter-embossing prevents deformation of the embossing due to loads acting on the embossed label. Such deformation may typically occur for embossing having a relatively large surface area.

Furthermore, providing a counter-embossing improves the manufacturing process, especially the step of gluing the label to the packaging unit. The counter-embossing renders the label more stable, in other words improves its shape stability, thereby reducing the risk of glue being provided in the embossing, especially in the raised relief.

Preferably, the top surface of the label comprises an embossing with counter-embossing. Besides the visual and haptic effect thereof, this embossing with counter-embossing increases the friction resistance between two packaging units according to the present invention that are stapled or stacked on top of each other. This improves the stability of a stack of packaging units according to the present invention. This reduces damages to the packaging units and the products contained thereby during transport and handling thereof. In a presently preferred embodiment the friction coefficient of the mouldable label is about 0.53, and above 0.45. Additional measures, such as providing an embossing, may further increase the friction resistance. This achieves the stability of a stack of packaging units. Preferably the bottom part of the packaging unit is provided with friction resistance increasing elements. Such elements may comprise ridges, grooves, pins, notches etcetera. This further improves the stability of a stack of packaging units, according to the present invention. Preferably, the friction resistance increasing elements provided on the bottom part of the packaging unit engage the embossing that is provided on the label provided on the cover part of the packaging unit to further improve the stability of a stack of packaging units.

In a presently preferred embodiment according to the present invention the angle between the side or sidewall of the embossing and/or the counter-embossing and the label surface is above 45°, preferably above 55°, and more preferably above 60°.

By providing a minimal angle between the side or sidewall of the embossing and the label surface the processing step of gluing the label to the packaging unit is made easier. Furthermore, such angle contributes to improving the visual appearance of the packaging unit to a consumer.

According to the present invention the label is a multiple-sided label.

By providing a multiple sided label the strength of the packaging unit with label is increased. The multiple-sided label comprises label parts that are connected to each other and are provided on two or more surfaces of the packaging unit. For example, the multiple-sided label may comprise label parts on the top, front and back surfaces of the cover part. It will be understood that other configurations are also possible.

The multiple-sided label contributes to the distribution of loads acting on the packaging unit. Besides improving the overall strength and stability of the packaging unit, the multiple-sided label may have the effect that less packaging material is required to achieve a similar strength. This reduces packaging material cost.

The multiple-sided label comprises a 4-sided label or a 5-sided label. Both labels have a label part provided on the top surface of the cover part of the packaging unit, and label parts on the front surface and/or back surface and/or one or two side surfaces of the cover part.

As mentioned the multiple-sided label significantly increases the strength of the packaging unit as a whole. For example, the (bending) stiffness of a packaging unit with a 4- or 5-sided label is much higher as compared to a conventional (one or two-sided) label of a similar material. The increased stiffness caused by the multiple-sided label reduces product losses and enables reducing the amount of packaging material that is required for safe transport, storage and display of products. Experiments, including a three-point bending stiffness measurement of packaging material without label and packaging material with different configurations for a label, show the positive contribution of the label on (bending) stiffness. A thicker label increases overall product stiffness. The 4- or 5-sided label according to the present invention, in other words a 3D-label, contributes to the overall three dimensional stiffness of the packaging unit enabling the reduction of product losses and/or reducing the amount of packaging material that is required.

In addition, the use of a 4- or 5-sided label reduces the ridging effects that may occur. This reduction is important to maintain the high quality appearance of the product and reduce product damage. This anti-ridging effect is especially improved at the transitions between the surfaces of the cover part such as the transition between the top and side surfaces.

Also, the 4- or 5-sided label contributes to the reduction of moisture influencing the packaging material and packaging strength. This is especially relevant when keeping the packaging unit in a cold-storage.

Providing a 4- or 5-sided label significantly enhances the label surface on which information can be presented to consumers. For example, a 5-sided label may achieve a 20-30% increase in label surface as compared to conventional labels for the same type of packaging unit that is attached to the top and front surfaces of the cover part of the packaging unit. This is relevant due to the increasing demands of especially governmental and/or consumer organizations requiring more information to be provided to the consumer.

Although an embodiment of the packaging unit according to the invention with a 4-sided label achieves most of the aforementioned effects, presently an embodiment of the packaging unit according to the invention with a 5-sided label is preferred as such embodiment further enhances the effects.

According to the present invention the label is a 4- or 5-sided label with an embossing comprising a counter-embossing. This significantly improves stability and strength of the packaging unit. In addition, visual appearance to a consumer and display of information to the consumer is significantly improved. The counter-embossing prevents deformation of the embossing.

In a presently preferred embodiment according to the invention the label comprises a fibrous or mouldable material achieving a labelled full fiber packaging unit.

The packaging unit according to the invention comprises a label from a material, including a so-called paper label that preferably has similar recycling properties as the material of the packaging unit. Further, providing the label material from a fibrous material and/or from a moulded material achieves a labelled full fiber packaging unit. This improves recycling properties of the packaging unit according to the invention.

More preferably, the label comprises material originating from fibrous pulp material. The production of such fibrous and/or pulp material is described in EP 0824619 resulting in so-called extensible or mouldable paper that is used for the label material. More preferably, in one of the preferred embodiment of the invention the mouldable material is stretched to improve embossing properties of the label. This also improves possibilities for counter-embossing the label.

By providing a label originating from a (fibrous) pulp material a visual and haptic effect is achieved, and in addition the packaging unit remains a full fibre product such that the packaging unit is a sustainable packaging unit that can be recycled relatively easily.

The label material that is applied to a presently preferred embodiment of the packaging unit according to the invention is preferably manufactured from so-called extensible or mouldable paper relating to paper that has been compacted in the wet phase. In this description mouldable and extensible are used interchangeably in relation to the label material. Preferably, this provides a labelled full fiber packaging unit that has excellent recycling properties.

The compacting of the wet pulp improves the flexibility of the label material when the paper is dried such that it can be stretched plastically without breaking the surface of the paper. This enables the provision of embossing on the label. For example, with a 10-20% elongation of the fibres, preferably with fibres in different orientation/direction in the label and without breaking the surface of the label, it is possible to impose an embossing on the flat surface and/or a counter-embossing with a depth of about 1 mm. This enables the generation of strong and surprising visual and optic effects, for example. Furthermore, this material enables embossing and counter-embossing to achieve one ore more of the aforementioned effects.

As a further advantage of a full fibre packaging unit comprising a container, such as a carton, made of moulded pulp and a label originating from (fibrous) pulp material an over all visual appearance is achieved providing a unitary look or visual associated with the packaging unit. Furthermore, providing the container and a label of the packaging unit according to the present invention of similar material improves the haptic perception of someone handling the packaging unit. In fact, someone is provided with a unitary product when touching the product. Such tactile feedback of the unitary material packaging unit according to the present invention to the user and/or person handling the packaging unit provides this user and/or person with a unitary impression and an association with sustainability.

The haptic effect described earlier that is associated with the packaging unit according to the present invention is further enhanced by providing the label with an embossing such that the haptic effect is improved and/or the visual appearance of the packaging unit is strengthened due to the three-dimensional effect of such embossing on a label. This is further improved by the use of counter-embossing.

The weight of the label material in a presently preferred embodiment is in the range of 70-200 g/m², preferably about 80-160 g/m². This maintains a relatively low weight of the entire packaging unit according to the present invention. In addition, when applied to a container, such as a carton, having a bottom and a cover part, especially the cover part can be provided with small dimensions, more specifically having a reduced thickness thereof, such that the overall weight of the packaging unit according to the present invention is maintained or even slightly reduced.

Furthermore, by providing a packaging unit comprising a container, preferably a carton, made of moulded pulp together with a label that originates from a (fibrous) pulp material a full fibre packaging unit is achieved. Such full fibre packaging unit can be recycled favourably. In addition, the packaging unit according to the present invention can be provided free of addition or chemical substances that are required for units with conventional paper labels. This achieves a significant effect on sustainability. This effect can be improved further by having the label shaped in the form of a rectangle in one of the possible embodiments according to the invention such that no production waste is created.

According to one of the embodiments according to the invention, as a further advantage, the label is printed having an optionally matt surface combined with a relatively soft touch, also referred to a as a smooth-feel label. These properties are similar to the properties of the container such that a unitary visual appearance is achieved strengthening the sustainable effect of the packaging unit according to the present invention.

Furthermore, the combination of the container, such as a carton, and label according to the invention with an embossing and counter-embossing, further reduces any ridging effects that may occur when handling the packaging unit.

As a further advantage of providing a cover part with an embossed label also having a counter-embossing is that an impact of a packaging unit that is stacked on another packaging unit will not immediately result in undesirable impact effects, such as indentation that significantly affects the overall visual appearance of the packaging unit according to the present invention. In a preferred embodiment of a packaging unit according to the present invention such indentation will not change the overall appearance of the embossed label. The shape of the embossing may also contribute to an impact resistance. For example, walls and elements, preferably substantially oriented in the direction of the impact force, may improve the impact resistance. Surprisingly, the combined effect of a multiple sided label, such as a 5-sided label, and embossment with counter-embossment of the label achieves a significant contribution to increasing the strength, stability and stiffness of the packaging unit and/or to the reduction of the amount of packaging material that is required.

Preferably, the embossing and/or counter-embossing has a depth in the range of 0.1 - 1.5 mm, preferably in the range of 0.5 - 1.0 mm. Such depth for an embossing achieves a desirable visual appearance. Preferably, the depths of the embossing and counter-embossing are similar.

Furthermore, preferably the label is provided with one or more embossments having a depth in the aforementioned range that act as a type of air cushions that are formed between the label and the cover part.

By providing air cushions the impact resistance of the label against loads put thereon is greatly increased. This reduces the risk of products held by the packaging unit according to the present invention being damaged. Also, the overall visual appearances are being maintained more easily. By providing an embossing a type of relief or a topography or engraved surface is provided such that small air rooms or air cushions are defined between the top surface of the cover part and the label that is attached thereto.

As a further effect, the air cushions/embossments provide an insulating effect. For example, this improves handling the container or packaging unit containing heated products.

Optionally, the label of the packaging unit is provided with a visual appearance substantially similar to that of the container. Providing the label and container with a substantial similar visual appearance contributes to the effect on sustainability. This visual appearance may involve roughness, hardness etc. Preferably, the label comprises an average surface roughness between 0.1 and 100 µm, more preferably between 0.5 and 10 µm, and most preferably between 1 and 4 µm.

Preferably, the label further comprises a number of glue edges. These edges are glued when attaching the label to the container. This assures that the edges of the label are strongly attached to the container. In addition, this minimizes the amount of glue that is required when attaching the label to the container. Furthermore, this maintains the effect the air cushions defined by the embossments in the label may have on the impact resistance that is described earlier. Alternatively, or in addition thereto, the contact areas of the embossing with the container or packaging unit are glued to the container of packaging unit. This increases the impact resistance. In addition, this contributes to an anti-ridging effect.

Optionally, and most preferably, the label comprises an embossing with a shape such that the embossed label behaves as a stacking element. Often packaging units are provided with so-called denesting or stacking nocks that function as a type of spacer maintaining a distance between individual packaging units when they are stacked in an open position waiting for the products to be put inside the packaging unit, for example. The label is provided with an embossing with a shape such that the embossed label behaves as a stacking element. For example, this shape relates to an embossing with a sufficient depth. This may obviate the need for separate stacking nocks or other denesting/stacking elements such that the overall design of the packaging unit according to the present invention can be made simpler and possibly less costly. This effect is improved further by providing the embossing with counter-embossing.

In a presently preferred embodiment according to the invention the label comprises multiple sided embossing comprising embossing on more than one surface. More preferably, the multiple sided embossing comprises at least 3-sided embossing, and preferably 4- or 5-sided embossing with embossing on top, front, side and rear surfaces. Preferably, several or all of the embossings comprise one or more counter-embossings.

Providing multiple sided embossing achieves an increase in strength of the packaging unit, and a visual and haptic effect in multiple and preferably all directions and improves the overall appearance of the packaging unit according to the invention.

In a presently preferred embodiment according to the present invention the front surface of the cover is provided with an embossing that is positioned such that in a closed position of the packaging unit the locking element of the bottom part is captured in the embossing.

The first locking element and a corresponding opening together define a lock for the packaging unit. By locking the cover part and the bottom part at the front surface the packaging unit can be closed. Preferably, the bottom part is provided with a protrusion shaped as an edge or a notch acting as first locking element, and the cover part is provided with a corresponding opening. As the protrusion fits in the opening a lock is achieved. The protrusion of the first locking element can be provided directly on the bottom part or on a separate closing flap that is hingedly connected to the bottom part.

The label comprises a surface provided with an embossing at the location of the opening in the cover front surface to enhance the locking function of the lock. In this embodiment the lock is kept out of sight in the closed position due to the provision of the label over the opening, preferably by providing in the label an embossing at the location of the opening in the cover part. This provides an additional room or cavern for receiving the locking edge/element. This is especially advantageous for a packing unit with a concealed lock. For example, the label can be embossed with a depth of 1 mm, such that the protrusion in the bottom part can be 1 mm larger or be manoeuvred 1 mm further into the opening in the cover part. This enhances the locking function of the lock such that the packaging unit according to the present invention is firmly closed. In a presently preferred embodiment the locking edge connected to the bottom part of the packaging unit protrudes outwards through the opening in the cover part at a slightly downward angle. This improves the locking function. In some alternative embodiments according to the invention the label is provided with a cut such that the first locking element may protrude somewhat further through the opening in the cover by pushing the label slightly outward in a closed position of the packaging unit. In a presently preferred embodiment the cut has a smile-shape. This will be described in more detail in another part of this description.

According to the invention the label is provided with a curved cut that is configured to enable the first locking element, and preferably a cam or cam structure thereof, to partly extend through the opening in the cover part and remain substantially behind the label in an embossment in a front surface of the label as seen in a front view of the packaging unit in a closed position.

By providing the label of the cover part with a curved cut at or close to the location of the first locking element in a closed position of the packaging unit, the packaging unit can be locked securely, while maintaining the front view of the label substantially intact. This provides an effective display surface to provide consumers with relevant information about the products inside the packaging unit, for example.

In a presently preferred embodiment the curved cut is positioned relative to the first locking element such that in a closed position of the packaging unit the first locking element defines a buckling or deflected part in the label. This further enhances the display surface and provides an additional three-dimensional effect on the label. Furthermore, the locking element distributes forces over the label in all relevant directions such that the risk of the label cracking or bursting when closing the packaging unit is significantly reduced.

In a presently preferred embodiment according to the invention a curved cut is positioned substantially along a part of the circumference of the embossing.

The cut enables the first locking element to partly extend through the cut in the label that is provided on the front surface of the cover part. By providing the cut at the circumference of the embossing an optimal visual appearance is achieved. In addition, forces acting on the label are optimally distributed.

By providing the label with a cut, also referred to as incision or slit, that defines an opening in the label, the first locking element is capable of extending through the opening in the front surface of the label.

Alternatively, a groove-shaped cut, incision or slit is provided that enables the first locking element to slightly deform the label. As an optional advantageous effect, the consumer is provided with information that the lock is correctly achieved. Furthermore, this provides the consumer with a visual indication of where, and how, to open the packaging unit.

Providing a curved cut provides a label that is well defined and is capable of distributing forces acting on the label in all relevant directions to prevent cracking or bursting of the label. Providing more than one curve radius enables providing a cut with any desired length. This provides additional flexibility for the dimensions of the packaging unit. Optionally, the curved cut comprises a cross-cut provided at least at one of the ends of the cut. Providing a cross-cut, preferably at both ends of the cut in the label, prevents undesired extension of the cut or tearing of the label when forces act on the label. This is achieved by increasing the flexibility of the label to follow the contour of the first locking element, specifically a cam structure thereof, in the closed position of the packaging unit.

Optionally, the label comprises a two-sided print. By providing the label with a two-sided print it is possible to provide information with both sides of the label. Therefore, the two-sided print preferably is combined with a container having an opening that corresponds to the label print or at least one side thereof. This achieves that one side of the label is in plain sight and the other (back) side of the label is visible through the opening of the carton. For example, the top surface of the label can be provided with the general markings indicating the type of product. The back side of the label can be provided with specific product information that would be visible when the cover part is lifted from the bottom part and the specific product information is made visible through an opening provided in the cover part of the packaging unit. This prevents the need for a separate print on the inside of the cover part of the packaging unit thereby making the manufacturing process of such packaging unit simpler. In addition, the manufacturing process with the method according to the invention is more cost effective. For example, this is achieved by reducing the amount of moulded fiber material and/or omitting the inside print on the material. In addition, the product does not necessarily require a printer capable of printing on moulded material and can be handled on the labelling equipment.

The present invention further relates to a method for providing a packaging unit with a label according to claim 10.

Such method provides the same effects and advantages as described with respect of the packaging unit. In fact, the method can be used with a large number of different embodiments of the packaging units according to the invention.

Further advantages, features and details of the invention are elucidated on a basis of preferred embodiments thereof, wherein reference is made to the accompanying drawings, in which:
- Fig. 1A shows an embodiment of a packaging unit according to the invention with counter-embossing;
- Fig. 1B shows an alternative embodiment of a packaging unit with a cut label;
- Fig. 1C shows a rear view of the packaging unit of fig. 1 A-B;
- Fig. 1D-E show alternative labels for the packaging unit of fig. 1B;
- Fig. 2A shows a front view of the packaging unit of fig. 1B;
- Fig. 2B shows a side view along line A-A of the packaging unit of fig. 2A; and
- Fig. 3 shows a detail of the counter-embossing of a packaging unit according to the invention.

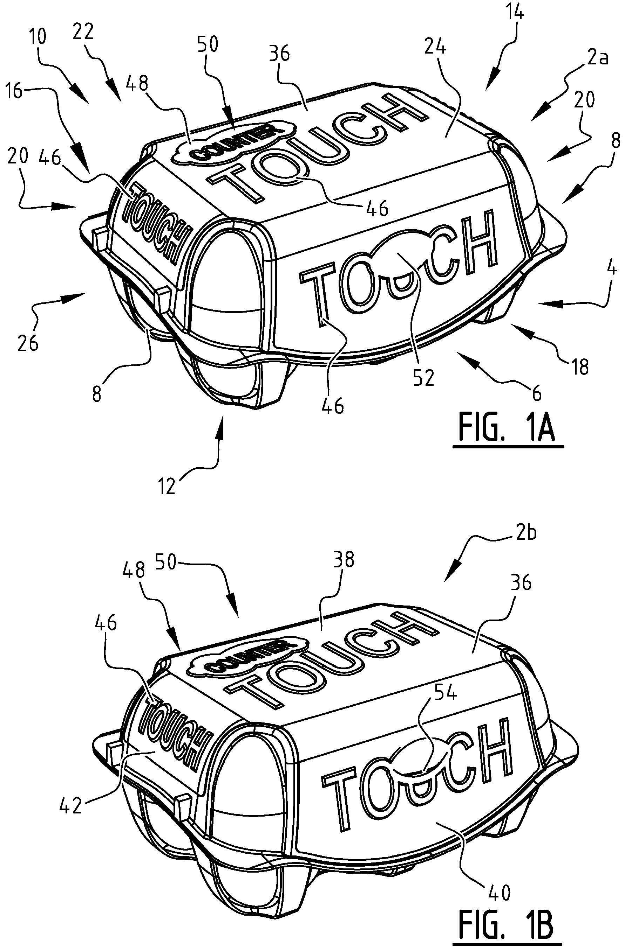

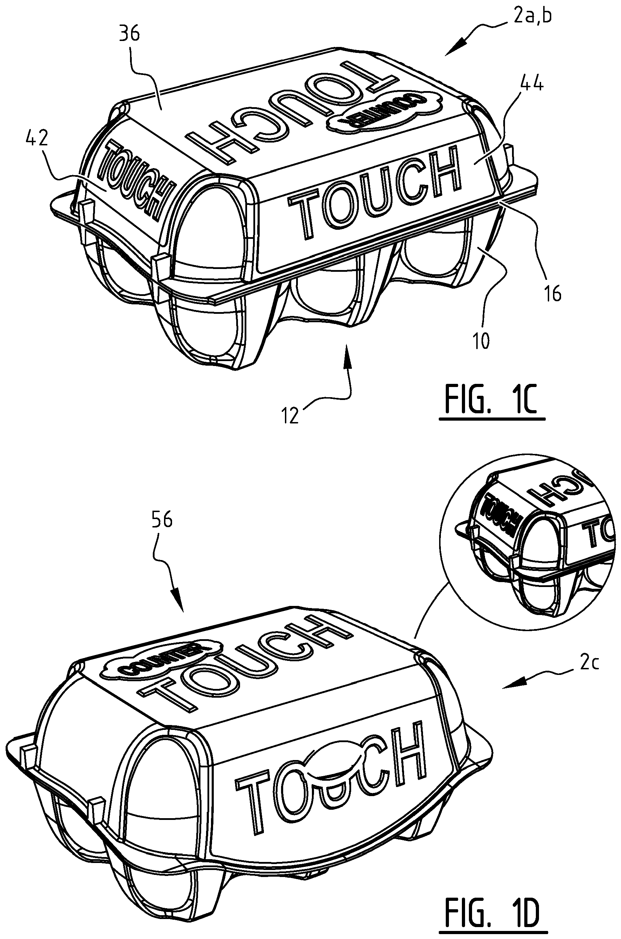

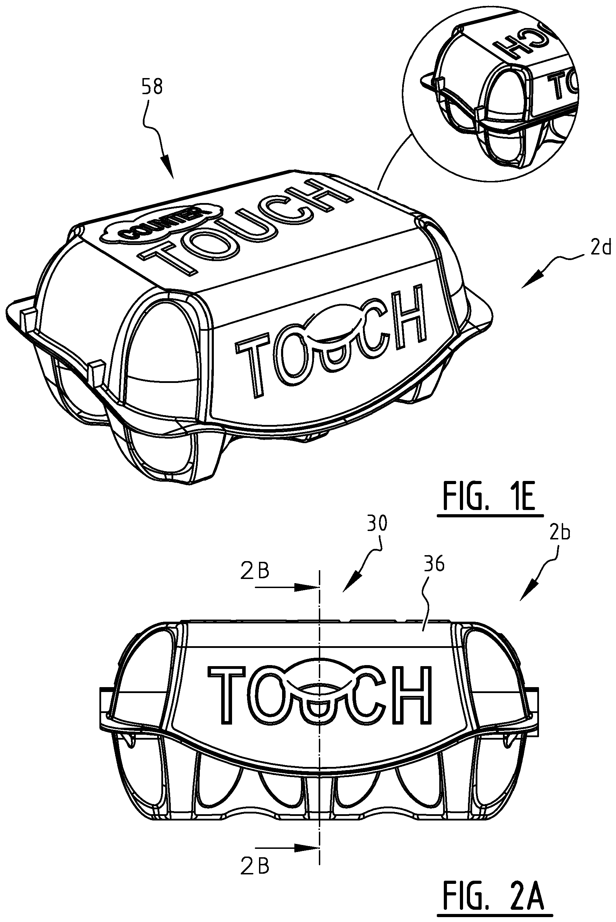

A packaging unit 2a (Figure 1A) comprises a bottom part 4 with a front surface 6, two side surfaces 8, a rear side 10, and a bottom side 12. In the illustrated embodiment, a cover part 14 is hingedly connected with hinge 16 to bottom part 4 to allow cover part 14 to move relatively to bottom part 4 between an open and a closed position. Cover part 14 further comprises front surface 18, two side surfaces 20, a back side surface 22 and a top surface 24.

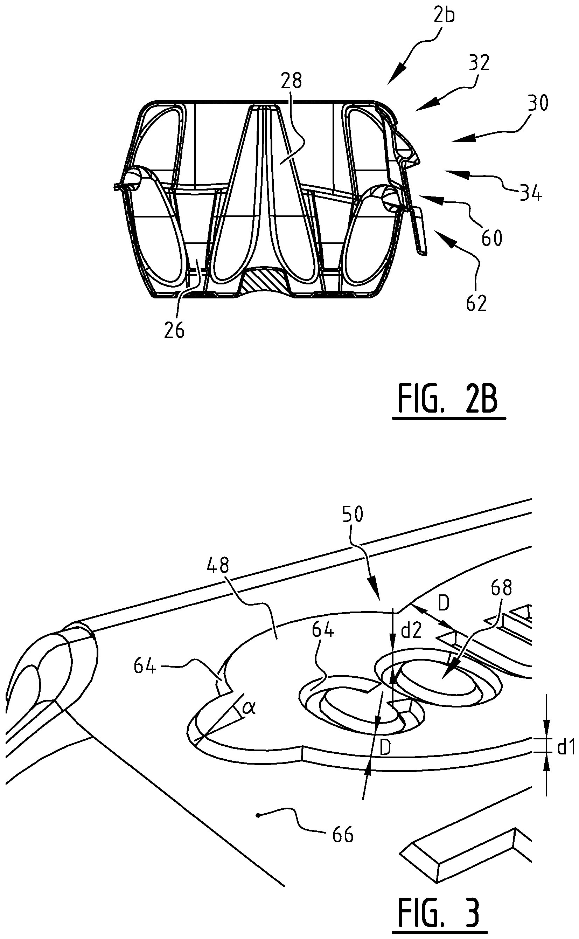

On the inside of bottom part 4 (Figures 1A-C and 2B) product receiving compartments 26 are provided having contours matching at least partially the outer contours of the products, like eggs, kiwis and tomatoes, for example. Support cones 28 are provided to add stability and strength to packaging unit 2a-d. Lock 30 comprises opening 32 in cover part 14 and cam 34 of bottom part 4.

Label 36 (Figures 1A-C and 2A) of a mouldable paper material comprises top surface 38, front surface 40, one or two side surfaces 42, and rear surface 44 to provide a 4 or 5-sided label. Optionally, no side surfaces 42 are provided resulting in a 3-sided label.

Label 36 comprises embossment 46 on top surface 38 and in the illustrated embodiments label 36 also comprises further embossments 48 on other sides of label 36. In the illustrated embodiment embossments 46 are provided as text. It will be understood that also other shapes, letters, numbers, pictures etc. for embossment 46 would be possible according to the invention.

In the illustrated embodiment top surface 38 of label 36 comprises embossment 48 with counter-embossing 50.

Further, packaging unit 2a (Figure 1A) comprises embossment 52 at the position of lock 30. This achieves a concealed lock 30 wherein in a closed position of packaging unit 2a cam 34 protrudes through opening 32 in front surface 24 of cover part 14 and is received in the inside of embossment 52.

Alternative packaging unit 2b (Figure 1B) comprises cut 54. In the illustrated embodiment smile-shaped cut 54 is provided at a lower edge of embossment 52. It will be understood that alternative cuts and positions are also possible in accordance with the invention. In a closed position cam 34 protrudes through opening 32 in front surface 24 of cover part 14 and pushes a part of label 36 outward to achieve lock 30. This provides a consumer with a clear indication of the position of lock 30 thereby enabling easy opening of packaging unit 2b.

For the illustrated embodiments 2a,b the rear views (Figure 1C) is the same. Hinge 16 enables to open cover 12. In the illustrated embodiment label rear side 44 also comprises embossment 46.

An alternative embodiment 2c (Figure ID) comprises a 4-sided label 56. Label 56 comprises embossment 46 and embossment 48 with counter-embossing 50. One side surface 20 that is free from label 56 is optionally provided with an illustration, text and/or data, such as production data.

A further alternative embodiment 2d (Figure IE) comprises a 3-sided label 58 with label parts on front surface 18, top surface 24 and back surface 22. Two side surfaces 20 are free from label 58.

Lock 30 (Figure 2A-B) comprises nose-shaped cam 34 acting as first locking element. Cam 34 is provided on flap 60 (Figure 2B) that is hingedly connected by connection 62 to bottom part 4 of packaging unit 2. In the illustrated embodiment, cam 34 defines a closed outer surface or outer contour defining a chamber. The substantially downward facing surface of cam 34 is in the illustrated embodiment a substantially closed surface without openings. In the closed position of packaging unit 2a-d, cam 34 partly extends through opening 32 that is provided in the front surface 18 of cover part 14. The upper edge of opening 32 is provided at a small angle and is slightly pushed inwards.

Embossing 48 (Figure 3) comprises counter-embossing 50. Embossing 48 and counter-embossing 50 have side edges or side walls 64. In the illustrated embodiment edges or walls 64 are provided at an angle α to the horizontal label surface 66. Counterembossing can also be applied to the area of embossing as shown by area 68 in the letter "O" of the word "TOUCH" and/or "COUNTER" in the label. In the illustrated embodiment angle α is about 60°. Depth d1 of embossing 48 is about 1 mm and depth d2 of counter-embossing 50 is also about 1 mm. In the illustrated embodiment the width of edge or wall 64 is about 0.5 mm. In an illustrated embodiment according to the invention the minimal distance D between edge or wall 64 of embossing 48 and edge or wall 64 of counter-embossing 50 is in the range of 0.5-2 mm. This provides a stable label 36. It will be understood that other angles and/or depths and/or distances can also be envisaged in accordance with the invention.

When packing products like eggs, the products are placed in compartments 28. In the illustrated embodiment, when cover part 14 is closed lock 30 with locking elements 32, 34 locks packaging unit 2a-d. In the illustrated embodiment, in such closed position cam 34 partly extends and protrudes through opening 32 of front surface 18 of cover part 14.

It will be understood that according to the invention other locks may also be applied, preferably using a hollow embossing part and/or a cut for receiving a locking part such as nose shaped cam 34. In the illustrated embodiment this results in a concealed lock 30. Concealed lock 30 enhances the locking friction as the edge, protrusion or projection can be dimensioned larger or can be pushed further into opening 32 in a closed position of packaging unit 2a-d as compared to conventional packaging units with flat labels.

Alternative packaging units according to the invention may hold other products, like kiwi's, eggs, tomatoes, apples etc. and/or also a hamburger, salad etc.

The present invention is by no means limited to the above described, preferred embodiments thereof. The rights sought are defined by the following claims, within the scope of which many modifications are possible.

## Claims

1. Packaging unit (2a,2b,2c,2d) for products like eggs, comprising:
- a bottom part (4) made of moulded pulp provided with compartments for individual products and comprising a first locking element (34);
- a cover part (14) made of moulded pulp comprising top (24), front (18), side (20) and rear surfaces (22) with the front surface comprising an opening as a second locking element configured for defining a lock with the first locking element in a closed state of the packaging unit; and
- a label (36) provided on the packaging unit with the label comprising an embossing (46,48,52), wherein the embossing further comprising a counter-embossing (50) in the area of the embossing, wherein the label is a multiple sided label (58), wherein the label is a 4-sided label (56) or a 5-sided label, and
wherein the label is provided with a curved cut (54) that is configured to enable the first locking element to partly extend through the opening in the cover part and remain substantially behind the label.

2. Packaging unit according to claim 1, wherein an angle between the side or sidewall (64) of the embossing and/or the counter-embossing and the label surface (66) is above 45°, preferably above 55°, and more preferably above 60°.

3. Packaging unit according to one or more of the foregoing claims, wherein the label comprises fibrous or mouldable material achieving a labelled full fiber packaging unit.

4. Packaging unit according to claim 3, wherein the fibrous or mouldable material comprises stretched material enabling embossing the label.

5. Packaging unit according to one or more of the foregoing claims, wherein the embossing has a depth (d1) in the range of 0.1 - 1.5 mm, preferably in the range of 0.5 - 1.0 mm.

6. Packaging unit according to one or more of the foregoing claims, wherein the counter-embossing has a depth (d2) in the range of 0.1 - 1.5 mm, preferably in the range of 0.5 - 1.0 mm.

7. Packaging unit according to one or more of the foregoing claims, wherein the label comprises multiple sided embossing comprising embossing on more than one surface.

8. Packaging unit according to one or more of the foregoing claims, wherein the multiple sided embossing comprises at least 3-sided embossing with embossing on top, front, and rear surfaces.

9. Packaging unit according to one or more of the foregoing claims, wherein the front surface of the label on the cover part is provided with an embossing (52) that is positioned such that in a closed position of the packaging unit the locking element of the bottom part is captured in the embossing.

10. Method for providing a packaging unit (2a,b,c,d) with a label (36) according to one or more of the foregoing claims, comprising at least the steps of providing the label with an embossing (46,48,52) and providing a counter-embossing (50) in the area of the embossing, providing a 4-sided or 5-sided label and providing the label with a curved cut (54).

11. Method according to claim 10, further comprising the step of placing one or more of the products in the packaging unit.

## Patentansprüche

1. Verpackungseinheit (2a, 2b, 2c, 2d) für Produkte wie Eier, aufweisend:
- ein Bodenteil (4) aus geformtem Zellstoff, der mit Unterteilungen für einzelne Produkte versehen ist und ein erstes Verschlusselement (34) aufweist;
- ein Deckelteil (14) aus geformtem Zellstoff, der eine obere (24), vordere (18), seitliche (20) und rückseitige (22) Oberfläche aufweist, wobei die Vorderseite eine Öffnung als ein zweites Verschlusselement aufweist, welche ausgebildet ist, um in einem geschlossenen Zustand der Verpackungseinheit gemeinsam mit dem ersten Verschlusselement einen Verschluss zu definieren; und
- ein auf der Verpackungseinheit vorgesehenes Etikett (36), wobei das Etikett eine Prägung (46, 48, 52) aufweist, wobei
die Prägung ferner in dem Bereich der Prägung eine Gegenprägung (50) aufweist, wobei das Etikett ein mehrseitiges Etikett (58) ist, wobei das Etikett ein 4-seitiges Etikett (56) oder ein 5-seitiges Etikett darstellt, und wobei das Etikett mit einem gekrümmten Schnitt (54) versehen ist, der so ausgebildet ist, dass das erste Verschlusselement sich teilweise durch die Öffnung in dem Deckelteil erstreckt und im Wesentlichen hinter dem Etikett verbleibt.

2. Verpackungseinheit nach Anspruch 1, wobei die Seite oder Seitenwand (64) der Prägung und/oder der Gegenprägung gegenüber der Etikettenoberfläche (66) einen Winkel über 45°, vorzugsweise über 55°, und noch bevorzugter über 60° aufweist.

3. Verpackungseinheit nach einem oder mehreren der vorherigen Ansprüche, wobei das Etikett aus faserigem oder formbaren Material besteht, wodurch eine etikettierte Vollfaser-Verpackungseinheit erhalten wird.

4. Verpackungseinheit nach Anspruch 3, wobei das faserige oder formbare Material ein dehnbares Material darstellt, welches das Prägen des Etiketts ermöglicht.

5. Verpackungseinheit nach einem oder mehreren der vorherigen Ansprüche, wobei die Prägung eine Tiefe (d1) im Bereich von 0,1 bis 1,5 mm, vorzugsweise im Bereich von 0,5 bis 1,0 mm aufweist.

6. Verpackungseinheit nach einem oder mehreren der vorherigen Ansprüche, wobei die Gegenprägung eine Tiefe (d2) im Bereich von 0,1 bis 1,5 mm, vorzugsweise im Bereich von 0,5 bis 1,0 mm, aufweist.

7. Verpackungseinheit nach einem oder mehreren der vorherigen Ansprüche, wobei das Etikett eine mehrseitige Prägung aufweist, die eine Prägung auf mehr als auf einer Oberfläche umfasst.

8. Verpackungseinheit nach einem oder mehreren der vorherigen Ansprüche, wobei die mehrseitige Prägung eine mindestens 3-seitige Prägung mit einer Prägung auf Ober-, Vorder- und Rückseite umfasst.

9. Verpackungseinheit nach einem oder mehreren der vorherigen Ansprüche, wobei die Vorderseite des Etiketts am Deckelteil mit einer Prägung (52) versehen ist, die so positioniert ist, dass in einem geschlossenen Zustand der Verpackungseinheit das Verschlusselement des Unterteils in die Prägung aufgenommen ist.

10. Verfahren zum Bereitstellen einer Verpackungseinheit (2a, b, c, d) mit einem Etikett (36) nach einem oder mehreren der vorherigen Ansprüche, aufweisend zumindest die Schritte
des Versehens des Etiketts mit einer Prägung (46,48,52) und
des Versehens mit einer Gegenprägung (50) im Bereich der Prägung,
des Versehens mit einem vierseitigen oder fünfseitigen Etikett sowie des Versehens des Etiketts mit einem gekrümmten Schnitt (54).

11. Verfahren nach Anspruch 10, ferner aufweisend den Schritt des Bestückens der Verpackungseinheit mit einem oder mehreren der Produkte.

## Revendications

1. Unité d'emballage (2a, 2b, 2c, 2d) pour des produits tels que des œufs, comprenant :
- une partie inférieure (4) faite de carton-pâte dotée de compartiments pour des produits individuels et comprenant un premier élément de verrouillage (34) ;
- une partie couvercle (14) faite de carton-pâte comprenant des surfaces supérieure (24), avant (18), latérales (20) et arrière (22) avec la surface avant comprenant une ouverture servant de second élément de verrouillage configuré pour définir un verrou avec le premier élément de verrouillage dans un état fermé de l'unité d'emballage ; et
- une étiquette (36) fournie sur l'unité d'emballage avec l'étiquette comprenant un gaufrage (46, 48, 52), dans laquelle le gaufrage comprend en outre un contre-gaufrage (50) dans la zone du gaufrage, dans laquelle l'étiquette est une étiquette à plusieurs côtés (58), dans laquelle l'étiquette est une étiquette à 4 côtés (56) ou une étiquette à 5 côtés, et
dans laquelle l'étiquette est dotée d'une découpe incurvée (54) qui est configurée pour permettre au premier élément de verrouillage de s'étendre partiellement à travers l'ouverture dans la partie couvercle et rester sensiblement derrière l'étiquette.

2. Unité d'emballage selon la revendication 1, dans laquelle un angle entre le côté ou la paroi latérale (64) du gaufrage et/ou du contre-gaufrage et la surface d'étiquette (66) est au-dessus de 45°, de préférence au-dessus de 55°, et de manière davantage préférée au-dessus de 60°.

3. Unité d'emballage selon une ou plusieurs des revendications précédentes, dans laquelle l'étiquette comprend un matériau fibreux ou moulable obtenant une unité d'emballage tout en fibres étiquetée.

4. Unité d'emballage selon la revendication 3, dans laquelle le matériau fibreux ou moulable comprend un matériau étiré permettant de gaufrer l'étiquette.

5. Unité d'emballage selon une ou plusieurs des revendications précédentes, dans laquelle le gaufrage a une profondeur (d1) dans la plage de 0,1 à 1,5 mm, de préférence dans la plage de 0,5 à 1,0 mm.

6. Unité d'emballage selon une ou plusieurs des revendications précédentes, dans laquelle le contre-gaufrage a une profondeur (d2) dans la plage de 0,1 à 1,5 mm, de préférence dans la plage de 0,5 à 1,0 mm.

7. Unité d'emballage selon une ou plusieurs des revendications précédentes, dans laquelle l'étiquette comprend un gaufrage à plusieurs côtés comprenant un gaufrage sur plus d'une surface.

8. Unité d'emballage selon une ou plusieurs des revendications précédentes, dans laquelle le gaufrage à plusieurs côtés comprend un gaufrage à au moins 3 côtés avec un gaufrage sur des surfaces supérieure, avant et arrière.

9. Unité d'emballage selon une ou plusieurs des revendications précédentes, dans laquelle la surface avant de l'étiquette sur la partie couvercle est dotée d'un gaufrage (52) qui est positionné de sorte que dans une position fermée de l'unité d'emballage l'élément de verrouillage de la partie inférieure soit capturé dans le gaufrage.

10. Procédé pour doter une unité d'emballage (2a, b, c, d) d'une étiquette (36) selon une ou plusieurs des revendications précédentes, comprenant au moins les étapes consistant à doter l'étiquette d'un gaufrage (46, 48, 52) et à fournir un contre-gaufrage (50) dans la zone du gaufrage, à fournir une étiquette à 4 côtés ou à 5 côtés et à doter l'étiquette d'une découpe incurvée (54).

11. Procédé selon la revendication 10, comprenant en outre l'étape consistant à placer un ou plusieurs des produits dans l'unité d'emballage.
